# EUROPEAN PATENT APPLICATION

(11) **EP 4 509 728 A1**
(43) Date of publication of application: **19.02.2025**
(21) Application number: 23191500.0
(22) Date of filing: 15.08.2023
(51) Int. Cl.: F16B 13/04, F16B 21/08, E04B 9/34

(54) **ANCHOR**

(71) Applicant: ROCKWOOL A/S, 2640 Hedehusene (DK)
(72) Inventor: The designation of the inventor has not yet been filed
(74) Representative: Gill Jennings & Every LLP

(57) **Abstract**

There is provided an anchor for a baffle. The anchor comprises a shaft securable, in use, at a first end with a suspension cable; and a barb having a connection to the shaft, the connection to the shaft being selectively adjustable to alter a location of the barb along the shaft. The barb is orientated to be engageable with a body radially adjacent to the shaft such that, when engaged with the body, the barb impedes movement of the shaft in an axial direction.

## Description

### FIELD OF THE INVENTION

The present invention relates to anchors suitable for baffles, such as acoustic baffles, that are typically used in suspending a baffle.

### BACKGROUND

At times objects, such as baffles, need to be suspended from a surface, such as a ceiling or a wall. To achieve this a mechanism is needed to provide an attachment between the surface from which the object is suspended and the object itself.

A mechanism commonly used to provide this attachment is a screw or nail. However, there are occasions when screws and nails are not practical. This can be due to the nature of the object that is being suspended. For example, the reason that conventional screws and nails may not be suitable can be due to the material from which the object is made. This includes materials in which a nail or screw is unable to gain sufficient purchase or to engage with sufficient friction, mechanical engagement and/or carrying/suspension capacity for a reliable connection between the fastening and the object to be formed. Baffle materials that might make conventional screws and nails unsuitable include polystyrene, mineral wool or glass wool.

When conventional screws and nails are not suitable, an alternative is needed when suspending an object from a surface. Such alternatives may take the form of an anchor, with the anchor having the ability to grip, hold or provide increased frictional or mechanical engagement with the object.

A possible anchor for objects made of materials in which conventional screws and nails may not be suitable is a screw with an enlarged thread depth, such as a depth corresponding to a considerable portion of the length of the screw. This provides extra purchase on the object material, increasing friction and resistance to longitudinal movement.

Providing an anchor only provides a fixing or fastening into the object. To suspend the object from a surface, a link needs to be provided between the surface and the object. This is typically achieved using a cable or wire. The cable is typically attached to the anchor by a hook, eye or another suspension system, which in turn is secured to the anchor.

It is common for an object to be suspended from two or more cables. When an object is to be held level, this means adjustments need to be made to tailor the positioning of all the components to allow the object to be held as wanted. When anchors like an enlarged thread anchor are used, and/or hooks, eyes and other suspension systems are used, it is often difficult to make adjustments without removing one or more components or having the anchor partially exposed outside of the object. This makes installation more time-consuming and may lead to an undesirable appearance or compromised performance of the anchor.

There is, therefore, a need for an improved ability to adjust the positioning of means used to suspend an objection.

Additionally, conventional fixings, including screws or nails even if adapted such as to have an enlarged thread depth, can be additionally compromised when exposed to fire. This is detrimental to the overall safety of these fixings and their use with suspended objects due to the risk of the object falling during a fire and causing injury, blocking access or adding additional flammable material to the fire. Improved safety under fire or other adverse conditions is therefore also a matter where further consideration is needed.

### SUMMARY OF INVENTION

According to a first aspect, there is provided an anchor for a baffle, the anchor comprising: a shaft securable, in use, at a first end with a suspension cable; and a barb having a connection to the shaft, the connection to the shaft being selectively adjustable to alter a location of the barb along the shaft, the barb being orientated to be engageable with a body radially adjacent to the shaft such that, when engaged with the body, the barb impedes movement of the shaft in an axial direction.

By implementing an anchor according to the first aspect, the length of shaft on either side of the barb is able to be adjusted. In use with a baffle, this typically results in the depth of the barb within the baffle being adjustable. This allows adjustment of the position at which the anchor engages a baffle, for example, to make precision adjustments to where the baffle and anchor connect to account for properties or attributes of the baffle and how the baffle is to be suspended.

In use, the barb may project radially outward from the shaft. As such, this allows the barb to engage with a body radially adjacent to the shaft.

The barb can be rigid, un-deformable or of a fixed shape. Typically, the barb is resiliently deformable and has a bias to an undeformed shape, the barb impeding movement of the shaft in use by the bias being configured to urge the barb towards the undeformed shape. The resiliently deformable nature and bias of the barb provides a spring-like means or spring force. This provision of an active element, instead of a passive block, increases the ability of the anchor to retain its position when engaged with a body during use.

Additionally, while being shape-dependent, should the barb fail, this failure will typically be non-resilient deformation, which would drive the barb into the body securing its position and further securing the anchor. For example, the barb may be arranged in use to deform when engaged with the body, such as being arranged to deform when an end of the barb engages with a body.

The barb may be able to impede (i.e. resist, restrict, slow, stop or block) movement of the anchor or shaft in multiple directions, such as multiple axial directions. Typically, the barb is orientated to be engageable with the body to impede movement of the shaft in a single axial direction. This simplifies the orientation and/or shape for barb compared to the orientation and/or shape that would allow for movement to be impeded in a plurality of directions.

The barb may be orientated perpendicular to the shaft or at an angle perpendicular or normal to the shaft. Typically, the barb extends radially outward from the shaft and axially along the shaft towards the first end. This provides the barb with an angled orientation with the barb angled towards the first end of the shaft. This angled arrangement reduces the strength needed in the barb perpendicular to the outward extension direction from the shaft (i.e. radially to the shaft). This is because the barb already has an extension component in this direction.

The barb may extend outward from the shaft in (only) a single direction. Typically, the barb extends radially outward from the shaft in a plurality of directions. This provides a greater ability and opportunity for the barb to engage an external body thereby providing multiple points of purchase when a plurality of points engage with an external body. Further, in use, this spreads forces experienced by the barb across multiple sections of the barb and, potentially, around the shaft.

The barb may extend radially outward from the shaft in opposing directions. This has a balancing or equalising effect on the forces experienced by the barb and that are passed to the shaft when the barb is engaged with an external body, such as in a bore. This reduces the chances of deformation occurring due to the barb catching on an external body only on one side.

The barb may extend radially outward from the shaft in at least three directions. This (further) spreads forces experienced by the barb, and that are passed on to the shaft, across a greater number of elements likely reducing the average force experienced by any single element. This makes the barb more capable of withstanding use and wear.

While the barb may extend radially outward in any number of directions, typically, the barb extends radially outward in four directions. This permits the barb to be in a cross (i.e. an "X") shape, such as by radially outward with no more than a 90 degree (°) angle separating each element or arm. This provides the barb with the ability to gain purchase on an external body easily and to be more likely for multiple elements to engage an external body at once. This increases the strength of the retention the barb applies on the ability to move the anchor.

The barb may be a discontinuous or continuous (i.e. smooth) inward or outward curve or straight and may have one of these shapes between opposing ends of the bard or may have one of these shapes between the connection to the shaft and one or more ends distal to the shaft. Typically, the barb has a bend between the connection to the shaft and a distal end to the connection. This enhances the ability of the barb to deform when a force is applied in an axial direction relative to the shaft. This, therefore, limits the movement of the barb when such a force is applied since it causes the barb to become more embedded in the body against which it is deforming. The bend may be provided by a vertex at a single location along the specified length of the barb or by vertices at a plurality of points along the specified length of the barb. Typically, the bend may extend the barb radially outward further from the shaft than if no bend was present.

The connection of the barb to the shaft may be a threaded connection. This provides a simple means of adjustment. Additionally, this allows for location adjustment by rotation and allows for repeatable and precise adjustment of the barb location. As an alternative, the barb connection may be a pressure, press or push-fit connection or some other form of connection.

The barb may be a plurality of barbs. This provides the ability to have barbs connected to the shaft at different locations from and/or at different orientations each other. This enhances the ability of the anchor to engage one or more external bodies laterally adjacent to the shaft.

The anchor may further comprise an end cap connected, in use, at a first end of the shaft. The end cap may have a support surface orientated towards an opposing end of the shaft from the first end, the support surface being arranged, in use, to form an interface with an external surface of the body. In use, this provides a clamp to hold a (external) body, such as a baffle, between the end cap and barb to create a secure connection with the body.

The anchor may further comprise a washer arranged on the shaft abutting the end cap support surface. The washer may be arranged in use to abut the body's external surface thereby locating the washer between the support surface and the body's external surface. This allows for movement of the end cap relative to the body and also distributes pressure applied to the body by the rest of the anchor.

The end cap connection to the shaft may be an adjustable threaded connection. While other adjustable or non-adjustable connections may be provided as an alternative, this ability to provide adjustment means that can "tighten" the connection between the end cap and shaft. This draws the shaft (further) into the end cap, which increases engagement of the barb with a body when the barb is engaged with a body. This is because, by drawing the shaft into the end cap, the distance between the end cap and the barb is reduced.

The anchor, such as (one or more of) the barb(s) and the shaft, may be made of steel. The shaft may be a different form of steel from the barb(s), and, when there are a plurality of barbs, one or more of the barbs may be a different form of steel from one or more of the other barbs. Regardless of this, being made of steel provides improved performance of the anchor in the event of fire relative to other materials, such as at least some plastics. Specifically, the improved performance in the event of a fire is provided by better structural integrity and resilience in a fire situation compared to other materials. This provides the anchor with better stability and better mechanical engagement than known connections. For example, the choice of steel as a material gives stability to at least 700 degrees centigrade (°C) and above.

According to a second aspect, there is provided a method of installing an anchor according to the first aspect, the method comprising: selecting a barb location along the shaft by adjusting the connection of the barb with the shaft; passing the barb and at least a portion of the shaft into a bore in the body, the orientation of the barb engaging the barb with a wall of the bore, the first end of the shaft being retained outside of the bore or being the closest portion of the shaft to an external opening of the bore; partially reversing the passage of the shaft into the bore; and securing the first end of the shaft to a suspension point.

When implementing the method according to the second aspect, the partial reverse pulls the barb into (full or sufficient) engagement with the body causing the barb to hold the anchor in place relative to the body. Selection of the barb location relative to the shaft also sets the height of the anchor relative to the body when the barb is engaged with the body. When the body is to be suspended using the anchor this sets the height at which the body is suspended and allows adjustment by adjusting the shaft-barb connection.

### BRIEF DESCRIPTION OF DRAWINGS

Example anchors and example methods of installation are described in detail herein with reference to the accompanying drawings, in which:
- Figure 1: shows a schematic view of a first example anchor;
- Figure 2: shows a schematic view of the first example anchor along axis A-A of Figure 1;
- Figure 3: shows a schematic view of a second example anchor;
- Figure 4: shows a schematic view of a third example anchor;
- Figure 5: shows a schematic view of the third example anchor along axis B-B of Figure 4;
- Figure 6: shows a schematic view of an example barb;
- Figure 7: shows a schematic view of a second example barb;
- Figure 8: shows a schematic view of a portion of an example anchor;
- Figure 9: shows a schematic view of a portion of a further example anchor;
- Figure 10: shows a schematic view of a portion of a third example barb;
- Figure 11: shows a schematic view of an example installed anchor; and
- Figure 12: shows a flow diagram of an installation method.

### DETAILED DESCRIPTION

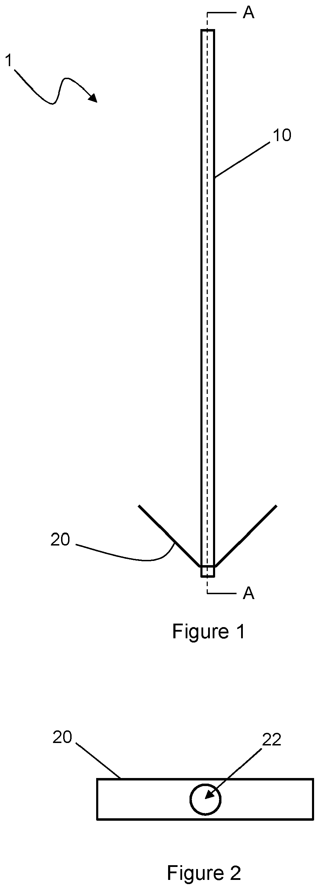

An example anchor is generally illustrated at 1 in Figure 1. This includes a shaft 10 and a barb 20. As set out in more detail below, an intended use of the anchor is to allow suspension of an external body. The body is often to be suspended from a ceiling or other surface with the anchor providing a connection point to a suspension point, such as a suspension cable, for the body, which is connected to the surface from which the body is suspended.

Where suspension cables or cables are mentioned below, this is also intended to be applicable to suspension points of other forms, such as, but not limited to, direct mounting or other non-cable based suspension means or mechanism. By "direct mounting" we intend to mean a mounting by which the anchor could be linked to a rigid structure without having a cable. This can include a hook or clip of some form, such as one or more of a spiral hook, snap hook, twist clip, hook, hook and eye, ring and eye or spring connection.

The shaft 10 is provided by an elongate rod in the example shown in Figure 1. In other examples, this is alternatively provided by a bolt, bar or plate of minimal width relative to their length.

In various examples, the shaft 10 has a diameter of 6 millimetres (mm), such as when the rod is a standard M6 (threaded) rod, such as a steel rod, typically of stainless steel. Providing a rod of this diameter balances weight with the strength or rigidity of the shaft to allow the anchor to provide the ability to connect to and be suspended from a suspension cable while securely engaging the body. Alternative examples may use a different diameter shaft.

Some examples of the shaft 10 provide a shaft of a length between 5 centimetres (cm) and 30 cm. Typically, the shaft has a length between 8 cm and 20 cm.

The barb 20 is a strip of material in the example shown in Figure 1. In some examples, the barb is a shaped strip, such as a stamped strip or shape cut from a sheet, but can be cast or moulded.

The barb 20 is a V shape in several examples. In use, the barb is connected to the shaft 10, and, typically, the connection to the shaft is in the middle of the V shape. In various examples, the barb is formed of only one side of the V with the connection still being provided at the same point, namely at where the middle point would be if both sides of the V were present.

In the example shown in Figure 1, the V shape of the barb 20 has a flat base. In this example, the flat base is arranged radially relative to the shaft 10 when the barb and shaft are connected.

In Figure 1, the barb 20 is shown connected proximal to one end of the shaft 10. The V shape of the barb 20 in the example shown in Figure 1 causes the ends of the strip that provides the barb to be at a greater axial distance from the proximal end of the shaft 10 than the middle of the strip. This, of course, makes the ends of the strip axially closer to the opposing end of the shaft than the middle of the strip.

In various examples, the position of the barb 20 on the shaft, such as the position along the length of the shaft 10, is fixed. In other examples, this position is adjustable.

The strip providing the barb 20 is spring steel in some examples. This may be stainless steel 301 1.4310. Other materials are able to be used.

Due to the shape of the barb 20, as well as extending axially along the shaft 10, the barb extends radially outward from the shaft. In other examples, the axial extension may be reduced or not provided. This would cause the barb to no longer have a V shape.

As shown in Figure 2, the barb 20 is provided with an aperture 22 in some examples. In use, the shaft 10 is located through the aperture with a connection being provided between the shaft and barb at the aperture.

Figure 2 also shows that, in this example, the barb 20 is rectangular. As set out below, other shapes can be used. The rectangle is typically between 5 cm and 15 cm in length and has a width of between 0.5 cm and 2.0 cm. The barb typically has a thickness between 0.5 mm and 2.0 mm.

The aperture 22 is centrally located in the example of Figure 2 in the rectangular form of the barb 20. Additionally, the angles at which the strip is bent between the flat base and the sides of the V shape are identical to each other in this example. In other examples the aperture may be located at a different position and/or the angles may differ from each other. However, due to the arrangement shown in the example of Figures 1 and 2, this causes sides of the V to extend radially away from the aperture and to extend axially along the shaft equally.

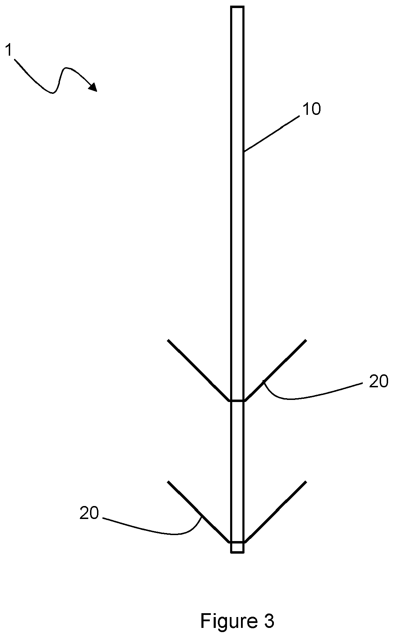

Figure 3 shows a second example anchor 1. This has a shaft 10 identical to the shaft in the example shown in Figure 1.

The anchor 1 shown in the example of Figure 3 also has a first barb 20 that is identical to the barb in the example shown in Figure 1 and Figure 2. In addition to this, there is a second barb 20 provided at a greater distance from the proximal end of the shaft 10 to the first barb. This second barb is identical to the first barb, and so, in use, is connected to the shaft in the same manner and has the same shape and arrangement relative to the shaft as the first barb.

While these barbs are presented as identical to each other in every way in the example shown in Figure 3, various alternatives and modifications are identified above and below. The second barb 20 may adopt any of these while the first barb 20 may be as presented in Figure 3 or may adopt a different alternative or modification to that of the second barb, which would cause a difference between the two barbs in the anchor 1 of this example.

One possible difference between the first barb 20 and second barb 20 is that the orientation of the first barb and second barb is able to be different. This means that the first barb and second barb may be out of alignment radially relative to the shaft 10. In other words, the second barb, in some examples, is able to rotate or be rotated or is orientated at an angle (radially) relative to the first barb.

Additionally, in various examples, the axial orientation of the first barb 20 and/or second barb 20 is reversed. This would cause the axial extension of the V of either or both of the barbs to point in the opposite direction to that shown in Figure 3 and could be opposite to each other in some examples.

In several examples, additional barbs are able to be provided in addition to the first barb 20 and second barb 20 of the example shown in Figure 3. These may be identical to the first barb or may adopt an alternative or modified form set out above or below.

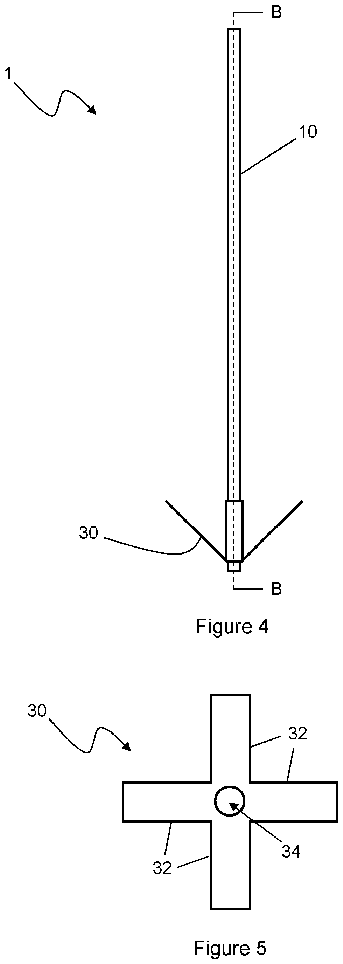

Figure 4 shows a third example anchor 1. This has a shaft 10 that is identical to the shaft of the examples shown in Figures 1 and 3. In place of the barb 20 shown in Figure 1 and the first barb and second barb 20 shown in Figure 3, the example shown in Figure 4 has a cross-shaped barb 30. This is shown in Figure 4 as located at the same position as the barb of the example of Figure 1. The cross-shaped barb is identical to the barbs of the examples shown in Figures 1 and 3 other than for the cross-shape. This means the connection between the barb and the shaft is provided in the same manner.

In the example shown in Figures 4 and 5, the cross of the barb 30 is provided by four arms 32 joined at a central point at which an aperture 34 is located. The arms are arranged perpendicular to each other. In other examples, there may be a different number of arms and/or the angle between the arms may be unequal.

The example of Figure 5 shows the cross-shaped barb 30 is formed of a single piece of material. In various examples, the cross shape may be provided by a plurality of pieces of material, such as by two crossed strips or material.

The combined length of opposing arms 32 of the cross-shaped barb 30 and the width of each arm is typically the same as the barb 20 of the example shown in Figure 1.

As shown most clearly in Figure 4, opposing arms 32 of the cross-shaped barb 30 have a V shape that corresponds to the V shape of the barb 20 of the example shown in Figure 1. In Figure 4 the arms of the barb are all shown extending in the same axial direction relative to the shaft 10. In some examples opposing arms may extend in different axial directions or one set of opposing arms may extend in a different axial direction to the other set of opposing arms.

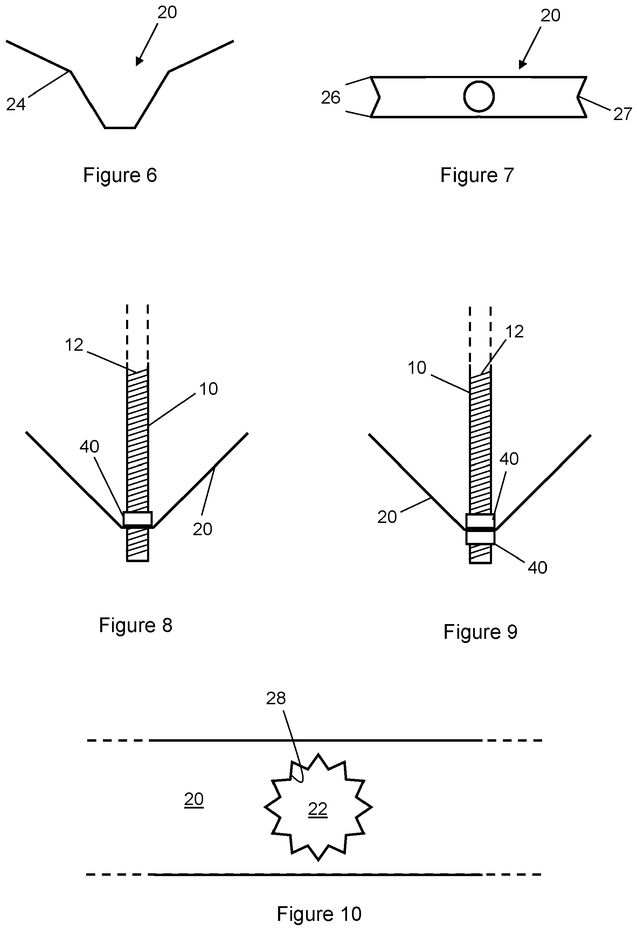

Further example barbs 20 and 20 are shown in Figure 6 and Figure 7 respectively. The example barb shown in Figure 6 is identical to the barb 20 shown in Figure 1 other than the barb of Figure 6 has a vertex 24 on each side of the V at the midpoints of the sides between the base of the V shape and the ends of the barb. The vertex provides the barb with an incline outward at a greater angle towards the end of the barb than toward the base of the V shape. In other examples, the incline may reduce the angle.

The barb 20 shown in the example of Figure 7 is also identical to the barb 20 shown in Figure 1 other than the shape of the opposing ends of the barb. In Figure 7 the opposing ends of the barb have a pair of tips 26 on opposing sides of the barb with a dip 27 between the tips of each pair. This provides a sharper point to the ends of the barb. In the example shown in Figure 7, the tips have straight edges. In other examples, tips may have one or more curved edges. There may also be further tips provided at each end of the barb or only a single tip provided at each end of the barb (such as by the barb having a taper towards its ends).

The examples shown in Figures 6 and 7 are able to be combined in various examples.

Figures 8 and 9 each show an example end section of an example anchor, such as the anchor 1 as shown in Figure 1. As such, these examples include a shaft 10 and a barb 20.

The shaft 10 in the examples of each of Figures 8 and 9 has a thread 12. In some examples, the thread extends the whole length of the shaft, and in other examples is only present on one or more portions of the shaft.

The barb 20 and shaft 10 in the example of Figure 8 are connected by a single nut 40. In the example of Figure 9, this connection is provided by two nuts 40. In use, each nut is threaded onto the shaft 10. In some examples, each nut is fixedly secured to the barb, such as by a weld or some of the fixing or fastening means. This arrangement, typically, is most applicable to the example shown in Figure 8 because the nut is located on a side of the barb, which means the barb would drop off the shaft if the nut and barb were not secured to each other. As an alternative, in various examples, each nut is an independent component from the barb, meaning there is no join between each nut and the barb. This, typically, is most applicable to the example shown in Figure 9, since the use of two nuts, one on either side of the barb, allows the barb to be clamped between the nuts in use without needing the barb to be secured to either nut. Whichever arrangement is applied or is most suitable for a particular situation in which the anchor is to be used, the arrangements shown in either Figure 8 or Figure 9 can also be applied to barbs of all forms used with various example anchors.

As an alternative to using nuts, the example in Figure 10 shows a portion of a barb 20. As with the barb shown in Figure 2, this has an aperture 22. Instead of the perimeter of the aperture being a smooth curve as is shown in the example barbs shown in Figures 2 and 5, the perimeter of this aperture has a plurality of inwardly facing teeth 28. These teeth are able to engage a thread or ribs on a shaft of the anchor in use to provide engagement of the barb with the anchor.

Whether a connection between a barb and the shaft is provided by the example shown in Figure 8, Figure 9, Figure 10 or by some other example, a common feature is that these allow the position of the barb on the shaft to be selected. The selected position is also able to be adjusted, such as by axially pushing the barb along the shaft (as may be possible if using the example barb of Figure 10) or by rotating the barb (or nut(s) if using the example barb of Figures 8 or 9). This also provides a simple means by which a plurality of barbs can be connected to a single shaft.

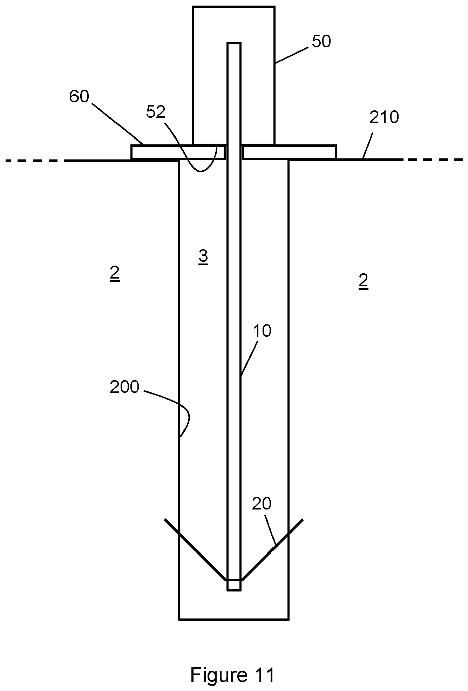

Turning to how the anchor 1 is used, Figure 11 shows an example anchor in use. The anchor is used, in this example, to provide an engagement point in a body 2 for a connection to be establishable between the body and another element. This is achieved by placing the anchor in a bore 3 of the (external) body. In various examples, the body is a baffle, such as an acoustic baffle, so the bore is a cut or drilled bore in or through the body.

The anchor 1 has a shaft 10 and barb 20, which in the example shown in Figure 11 corresponds to the example anchor shown in Figure 1. The barb is shown in Figure 11 as extending into a wall 200 of the bore 3 in the body 2. This provides an engagement between the anchor and the body. Due to the V shape of the barb, the anchor resists movement outwardly from the bore along a longitudinal axis of the shaft when engaged with the body, but has less resistance to movement inwardly into the bore. This is because movement outwardly from the bore drives the sides of the barb further into the body whereas movement inwardly to the bore withdraws the barb from the body. Typically, the movement into the body is achieved by the barb being resiliently deformable so is biased towards an undeformed position, such as due to the material (e.g. spring steel) from which the barb is made.

The example anchor 1 shown in Figure 11 has the barb 20 located at one end of the shaft 10. At the opposing end of the shaft, which is able to be referred to as a first end, an end cap 50 is connected to the shaft. In various examples, this is threadedly connected to the shaft in use. The end cap is able to be connected to, for example, a suspension cable (not shown) in use to allow suspension of the body 2 when the anchor is engaged with the body.

In Figure 11 a washer 60 on the shaft 10 on the proximal side of the end cap 50 to the barb 20. In the example shown in Figure 11, the washer has an outer diameter larger than the diameter of the bore 3 in the body. In use, this allows the washer to provide an interface between a support surface 52 on the end cap and an exterior surface 210 of the body.

When the end cap 50 is threadedly engaged with an end of the shaft 10 in use, threading the end cap onto the shaft reduces the distance between the support surface 52 and the opposing end of the shaft. If the barb 20 is engaged with the body 2, if the distance between the support surface and the opposing end of the shaft is reduced sufficiently, the support surface will push against the washer, which will, in turn, push against the external surface 210 of the body. This provides a clamping effect to provide a more rigid connection between the anchor 1 and the body. If the diameter of the end cap is sufficient, this effect can, of course, be provided without using the washer.

In various examples, the clamping effect described does not need to be provided, including in some examples where the end cap 50 is present. Some examples where this may be wanted is where it is desirable for the position of the barb 20 on shaft 10 to be adjusted after installation. While the position of the barb on the shaft may be selected before installation, allowing that selection to be adjusted provides an ability to adjust how much, if any, of the shaft projects out of the bore 3. When a connection to a suspension cable is provided, for example, at an end of the shaft, being able to adjust the position of the shaft relative to the barb, and therefore relative to the body when the barb 2 is engaged with the body allows adjustment of the suspension point. Should multiple anchors be used, this allows the positioning of each to be adjusted, for example, to ensure the body is level in one or more directions.

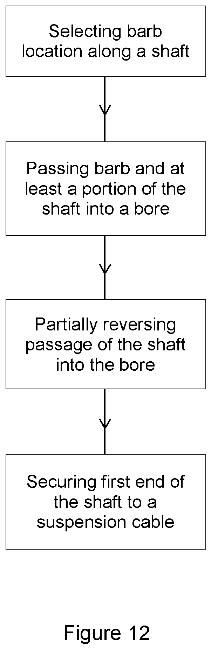

To install an anchor according to the examples described herein in a body, a process such as the example process set out in Figure 12 is able to be implemented. In this process, the location of the barb along the length of the shaft is able to be selected. This may be the selection of the position the barb is already located in, an adjustment of that location or connecting the barb to the shaft when there was not previously a connection and choosing the position.

The barb and at least a portion of the shaft are then passed into a bore in a body. Typically, the barb extends radially outward from the shaft equal to or more than the diameter/width of the bore. This can cause deformation of the barb to allow the barb and shaft to pass into the bore.

Once the barb is located in the bore at a suitable location, the passage into the bore is partially reversed. In other words, the barb and shaft are pulled outwardly from the bore partially. In some examples, this can be achieved, all or in part, by attaching an end cap to the end of the shaft as set out above and causing it to pull the shaft into the end cap as it is screwed onto the shaft while pressing against the body or washer engaged with the body. Since the barb is typically angled relative to the walls of the bore, this causes the barb to catch on the walls of the bore and potentially drive the ends of the barb into the walls of the bore. Whether the barb only catches on the walls of the bore or is driven into the body by this movement, this provides an engagement between the anchor and the body.

An end of the shaft projecting from or closest to (and outwardly facing from) the bore is then connected to a suspension cable. In some examples, this is achieved by using an end cap. Once this connection is provided, the anchor can be used in suspending the body from the cable and any element to which the suspension cable is attached.

During development, various examples were tested in a body to identify the weight that each example could accept before failing. The tests were all conducted using a Rockfon Contour acoustic baffle using 16 mm diameter bores into which the example anchors were placed. The barbs used in all the tests were barbs combining the examples shown in Figures 6 and 7, and so are barbs having vertices on each side and two tips at each end with a dip therebetween. The barbs were connected to a shaft provided by a threaded rod. The barbs were fixed to the shaft using two nuts in the arrangement shown in Figure 9.

Five tests were run, in which the first test used two cross-shaped barbs as shown in Figure 4. The cross-shaped barb was provided by two rectangular barbs as shown in the examples in Figures 6 and 7 arranged one on top of the other with the top barb rotated 90 degrees (°) around the shaft relative to the bottom barb. As set out above, these barbs were held in place between two nuts as shown in Figure 9 and a nut was present between the two rectangular barbs. Two sets of this arrangement were provided to provide two cross-shaped barbs with the top cross-shaped barb rotated about the shaft by about 45° relative to the bottom cross-shaped barb.

For the first test, the cross-shaped barbs were located with a first barb at an end of the shaft with the tips of the barb located axially closer to the opposing end of the shaft. The second cross-shaped barb on the shaft was provided with the same axial orientation as the first barb and axially separated from the first towards the opposing end of the shaft with a separation from the first barb of about 10 cm.

The second test used the same arrangement as the first test but with only a single cross-shaped barb instead of two cross-shaped barbs. The single cross-shaped barb used in the second test was provided using the same arrangement as the cross-shaped barbs used in the first test. The single cross-shaped barb was provided at the end of the shaft.

The third test used two barbs that correspond to the examples shown in Figures 6 and 7. These barbs have the same axial orientation as the barbs used in the first and second tests and are positioned on the shaft and axially separated from each other in a similar manner to how the barbs were arranged in the first test. The barbs of the third test were also orientated at a 90° rotation to each other about the shaft.

The fourth test uses a single barb that corresponds to the examples shown in Figures 6 and 7. This barb had the same axial orientation as in the other tests and was located on the shaft close to an end of the shaft.

The fifth test replicated the first test.

To position the anchor of each test in a respective bore, the end of the shaft to which the barb(s) is connected is passed into the bore. For the anchors of the first and fifth tests, the anchor was then pulled back to retract the anchor from the bore by about 1 cm. In the other tests, the anchor was pulled back by about 2 cm. These were the approximate distances it was found as allowing the barb to engage with the walls of the respective bore to engage with the baffle.

To assess the anchors, a breaking load was applied to each anchor. This was achieved by manually pulling the shaft in an axial direction out of the bore with a dynamometer until the shaft was pulled out of the bore or was completely blocked from further retraction. The dynamometer was set to measure the highest registered load. The results indicated that the first test achieve the highest registered load, followed by the fifth test, then, sequentially, the second test, third test and fourth test.

When the anchors failed, they either came out of the baffle or the wings got stuck inside the baffle, sometimes piecing the sides of the baffle and being visible through the sides of the baffle. When the sides of the baffler were pierced, this was because the barbs were orientated to allow them to pierce the sides of the baffle, such as when they are orientated across the width of the baffle instead of along the length. Test that this would have been possible for are the first, second, third and fifth tests.

## Claims

1. An anchor (1) for a baffle, the anchor comprising:
a shaft (10) securable, in use, at a first end with a suspension cable; and
a barb (20) having a connection to the shaft, the connection to the shaft being selectively adjustable to alter a location of the barb along the shaft, the barb being orientated to be engageable with a body (2) radially adjacent to the shaft such that, when engaged with the body, the barb impedes movement of the shaft in an axial direction.

2. The anchor (1) according to claim 1, wherein the barb (20) is resiliently deformable and has a bias to an undeformed shape, the barb impeding movement of the shaft (10) in use by the bias being configured to urge the barb towards the undeformed shape.

3. The anchor (1) according to claim 1 or claim 2, wherein the barb (20) is orientated to be engageable with the body (2) to impede movement of the shaft (10) in a single axial direction.

4. The anchor (1) according to any one of the preceding claims, wherein the barb (20) extends radially outward from the shaft (10) and axially along the shaft towards the first end.

5. The anchor (1) according to any one of the preceding claims, wherein the barb (20) extends radially outward from the shaft (10) in a plurality of directions.

6. The anchor (1) according to claim 5, wherein the barb (20) extends radially outward from the shaft (10) in opposing directions.

7. The anchor (1) according to claim 5 or claim 6, wherein the barb (20) extends radially outward from the shaft (10) in at least three directions.

8. The anchor (1) according to claim 7, wherein the barb (20) extends radially outward in four directions.

9. The anchor (1) according to any one of claims 4 to 8, wherein the barb (20) has a bend (24) between the connection to the shaft (10) and a distal end to the connection.

10. The anchor (1) according to any one of the preceding claims, wherein the connection of the barb (20) to the shaft is a threaded connection.

11. The anchor (1) according to any one of the preceding claims, wherein the barb (20) is a plurality of barbs.

12. The anchor (1) according to any one of the preceding claims, further comprising an end cap (50) connected, in use, at a first end of the shaft, the end cap having a support surface (52) orientated towards an opposing end of the shaft from the first end, the support surface being arranged, in use, to form an interface with an external surface (210) of the body (2).

13. The anchor (1) according to claim 12, further comprising a washer (60) arranged on the shaft (10) abutting the end cap support surface (52) and arranged in use to abut the body external surface (210) thereby locating the washer between the support surface and the body external surface.

14. The anchor (1) according to claim 12 or claim 13, wherein the end cap connection to the shaft (10) is an adjustable threaded connection.

15. A method of installing an anchor (1) according to any one of the preceding claims, the method comprising:
selecting a barb (20) location along the shaft (10) by adjusting the connection of the barb with the shaft;
passing the barb and at least a portion of the shaft into a bore (3) in the body (2), the orientation of the barb engaging the barb with a wall (200) of the bore, the first end of the shaft being retained outside of the bore or being the closest portion of the shaft to an external opening of the bore;
partially reversing the passage of the shaft into the bore; and
securing the first end of the shaft to a suspension point.
